# EUROPEAN PATENT APPLICATION

(11) **EP 4 009 648 A1**
(43) Date of publication of application: **08.06.2022**
(21) Application number: 20853891.8
(22) Date of filing: 10.07.2020
(51) Int. Cl.: H04N 21/443

(54) **CLOUD DESKTOP VIDEO PLAYBACK METHOD, SERVER, TERMINAL, AND STORAGE MEDIUM**

(30) Priority: 16.08.2019 CN 201910760781
(71) Applicant: ZTE Corporation, Shenzhen, Guangdong 518057 (CN)
(72) Inventor: GUO, Teng, Shenzhen, Guangdong 518057 (CN)
(74) Representative: Zoli, Filippo
(86) International application number: PCT/CN2020/101297
(87) International publication number: WO 2021/031739

(57) **Abstract**

A cloud desktop video playback method, a server, a terminal, and a storage medium. A server side sends a target media stream file comprising audio file stream and video image file stream together to a terminal side, and the terminal side can decode the target media stream file and then play back same.

## Description

### CROSS-REFERENCE TO RELATED APPLICATION

The present application is filed on the basis of Chinese Patent Application No. 201910760781.7 filed on August 16, 2019, and claims priority of the Chinese patent application, the entire contents of which are incorporated herein by reference.

### TECHNICAL FIELD

Embodiments of the present invention relates to the technical field of cloud computing and virtualization, and in particular to a cloud desktop video playing method, a server, a terminal device, and a storage medium.

### BACKGROUND

In recent years, cloud desktop has developed vigorously in China. Many schools, governments, and enterprises are using cloud desktop technology to replace traditional PCs. Cloud desktop is a revolution in enterprise IT architecture, which provides mobile computing experience while meeting the needs of many specific industries.

With the rapid commercialization of cloud desktop, customers not only have the daily needs of working on the cloud desktop, but also have the basic needs of being able to play local videos normally. Depending on decoding modes, the desktop video playing may be realized by two methods, namely server decoding playing and client decoding playing. The server decoding playing method will take up a lot of CPU processing resources of a server and reduce the number of virtual machines that the server can carry and run, while the client decoding playing method will easily lead to the problem of video and audio out of sync at a client because audio streams and video image streams are transmitted to the client separately.

### SUMMARY

In embodiments of the present invention, a cloud desktop video playing method, a server, a terminal device and a storage medium are provided to solve one of the related technical problems at least to a certain extent, such as a problem of video and audio out of sync at the client because audio streams and video image streams are transmitted to the client separately.

In view of this, the embodiments of the present invention provide a cloud desktop video playing method, including: after an instruction to enable a cloud desktop player is detected, replacing an original playing architecture component in the cloud desktop player with a playing architecture reconstruction component through a Hook Function; intercepting a target media stream file to be played by the cloud desktop player, where the target media stream contains an audio file stream and a video image file stream; transmitting the undecoded target media stream file to a terminal device side; and sending a playing start instruction to the terminal device, and controlling the terminal device to play synchronously with the cloud desktop player, where the terminal device plays the target media stream file, and the cloud desktop player plays false media without decoding.

The embodiments of the present invention further provide a cloud desktop video playing method, including: receiving an undecoded target media stream file transmitted from a server side, where the target media stream contains an audio file stream and a video image file stream; and decoding and playing the target media stream file based on a playing start instruction sent from the server, and synchronizing a playing process of the target media stream file with the playing process of false media without decoding of the cloud desktop player at the server side.

The embodiments of the present invention further provide a server, including a first processor, a first memory and a first communication bus. The first communication bus is configured to implement communication between the first processor and the first memory. The first processor is configured to execute one or more programs stored in the first memory to implement perform the steps of the cloud desktop video playing method at the server side.

The embodiments of the present invention further provide a terminal device, including a second processor, a second memory and a second communication bus. The second communication bus is configured to implement communication between the second processor and the second memory. The second processor is configured to execute one or more programs stored in the second memory to perform the steps of the cloud desktop video playing method at the terminal device side.

The embodiment of the present invention further provide a storage medium storing at least one of a first cloud desktop video playing program and a second cloud desktop video playing program. The first cloud desktop video playing program, when executed by one or more processors, causes the one or more processors to perform the steps of the above cloud desktop video player method. The second cloud desktop video playing program, when executed by one or more processors, causes the one or more processors to perform the steps of the above cloud desktop video playing method.

Other features and corresponding beneficial effects of the present invention are described below in the description, and it should be understood that at least some of the beneficial effects will become apparent from the description of the present invention.

### BRIEF DESCRIPTION OF DRAWINGS

FIG. 1 is a flow chart of a cloud desktop video playing method at a server side according to embodiment one of the present invention;
FIG. 2 is a schematic diagram of DirectShow playing architecture shown in embodiment one of the present invention;
FIG. 3 is a schematic diagram of Media Foundation playing architecture shown in embodiment one of the present invention;
FIG. 4 is a schematic diagram of the reconstructed DirectShow playing architecture shown in embodiment one of the present invention;
FIG. 5 is a schematic diagram of the reconstructed Media Foundation playing architecture shown in embodiment one of the present invention;
FIG. 6 is a flow chart of the cloud desktop video playing method at a terminal device side according to embodiment one of the present invention;
FIG. 7 is an interactive flow chart of a cloud desktop video playing method according to embodiment two of the present invention;
FIG. 8 is a schematic diagram of a hardware structure of a server according to embodiment three of the present invention; and
FIG. 9 is a schematic diagram of a hardware structure of a terminal device according to embodiment three of the present invention.

### DETAILED DESCRIPTION

In order to make the objective, technical schemes and advantages of the present invention clearer, embodiments of present invention will be further described in detail below with reference to the accompanying drawings by specific implementation modes. It should be understood that the embodiments described herein are presented for purpose of illustration only but not for limitation of the present invention.

### Embodiment One:

A desktop video may be played by two methods, namely server decoding playing and client decoding playing. The advantages and disadvantages of the two playing methods are described separately as follows.

### 1. Server decoding playing

Server decoding playing is a traditional cloud desktop video playing method in which video files are de-encapsulated, decoded and played on a server, and video images are projected as a part of desktop images to a client through a certain transmission protocol. The server decoding playing will take up a lot of CPU processing resources of a server side, thus inevitably resulting in the reduction of the number of virtual machines that the same server can carry. At the same time, the amount of decoded data is tens or even hundreds of times that of encoded data, which will take up a lot of network bandwidth resources when transmitted to the client. To reduce the demand for bandwidth and to ensure the smoothness of desktop of the client, the desktop images are bound to be compressed again for transmission, and therefore may lead to unclear and unsmooth video images at the client.

### 2. Client decoding playing

Client decoding playing is to re-orientate original audio and video data to the client for video decoding and playing, which may be implemented in two ways, namely playing re-orientation by interception and playing re-orientation by files.

### 2.1. Playing re-orientation by files

There may no need to pay attention to the playing architecture of a cloud desktop player, because the playing re-orientation by files requires a self-developed player to share video files or to build HTTP services, and the client adopts a shared file address or HTTP address for video playing. This playing method takes up neither network bandwidth nor server CPU, and videos are played clearly and smoothly. However, as the playing re-orientation by files requires the self-developed player, the user's usage habit is limited. Moreover, not all video files support streaming media, and only limited media formats are supported. In addition, this method also has potential risks.

### 2.2. Playing re-orientation by interception

Playing re-orientation by interception is to replace some components according to different playing architecture, intercept audio and video data and re-orientate the intercepted data to the client for video decoding and playing. This playing method takes up neither network bandwidth nor server CPU, and videos are played clearly and smoothly. However, playing re-orientation by interception is to transmit video streams and audio streams to the client separately for playing, and the problem of video and audio out of sync may be solved during playing, which often occurs during pause, fast-forward and other operations of the player.

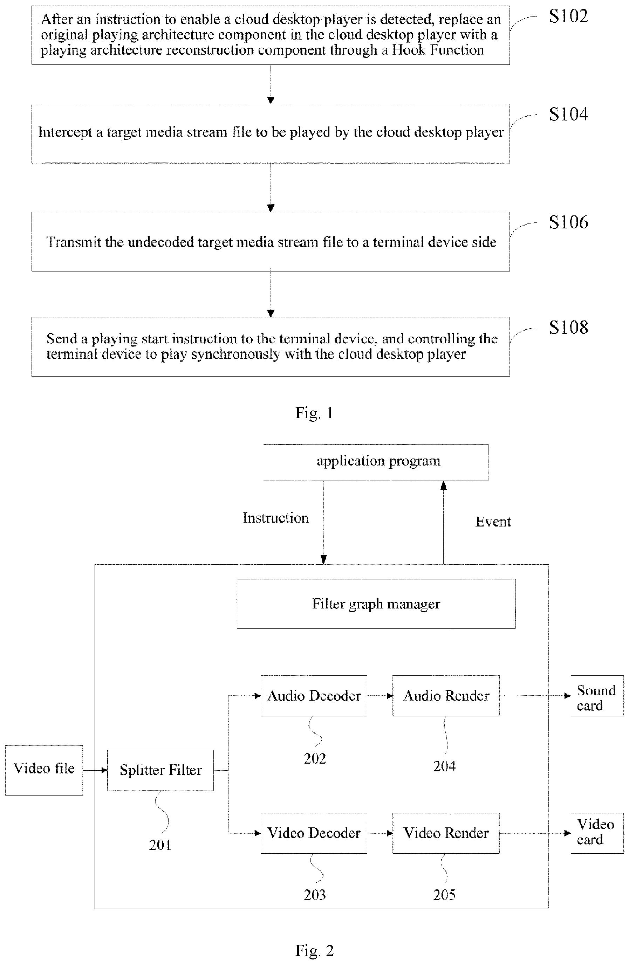

To solve the above problems of the cloud desktop player, a novel cloud desktop video playing method is provided in this embodiment. Reference may be made to a flow chart of the cloud desktop video playing method at the server side shown in FIG. 1. The method includes the following steps of S 102, S104, S106 and S108.

At S102, after an instruction to enable a cloud desktop player is detected, an original playing architecture component in the cloud desktop player is replaced with a playing architecture reconstruction component through a Hook Function.

The cloud desktop video playing method provided in this embodiment is actually based on playing re-orientation by interception, so the original playing architecture component in the cloud desktop player will also be replaced with the playing architecture reconstruction component in this embodiment. Two typical and widely used cloud desktop playing architecture are described below.

### (1) DirectShow playing architecture

FIG. 2 shows a schematic diagram of the DirectShow playing architecture. The cloud desktop player under the DirectShow playing architecture includes a Splitter Filter 201, decoders and renders, where the decoders include an Audio Decoder 202 and a Video Decoder 203, and the renders also includes an Audio Render 204 and a Video Render 205.

The Splitter Filter 201 is a Source Filter of the cloud desktop player configured to read and de-encapsulate video files. The Splitter Filter 201 will also transmit de-encapsulated audio streams and video image streams to the corresponding decoders separately.

The Audio Decoder 202 selected based on an encoded format of audios transmits decoded audio data to the Audio Render 204.

The Video Decoder 203 selected based on an encoded format of video images transmits decoded video image data to the Video Render 205.

The Audio Render 204 writes the decoded audio data into a sound card.

The Video Render 205 renders the video images based on playing duration of video frames.

Operations, such as pause, fast forward and stop, may be exchanged between the DirectShow playing architecture and an application.

### (2) Media Foundation playing architecture

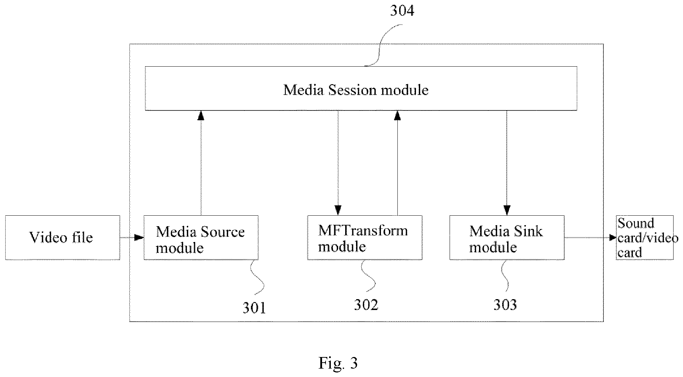

FIG. 3 shows a schematic diagram of the Media Foundation playing architecture. The cloud desktop video player under the Media Foundation playing architecture includes a Media Source module 301, a Media Foundation Transform (MFTransform) module 302, a Media Sink module 303 and a Media Session module 304.

The Media Source module 301 is configured to read and de-encapsulate the video files. Different from the DirectShow playing architecture, audio streams and video streams de-encapsulated by the Media Source module 301 will not be transmitted directly to corresponding decoding modules, but to the Media Session module 304, and then to the corresponding decoding modules by the Media Session module 304.

The MFTransform module 302 is actually an audio-video decoding module which selects corresponding decoders for decoding based on encoded formats of audios and videos and transmits the decoded data to the Media Session module 304. Upon receipt of the decoded audio and video data, the Media Session module 304 transmits the data to the Media Sink module 303.

The Media Sink module 303 can write the decoded audio data into the sound card and the decoded video data into a video card.

Operations, such as pause, fast forward and stop, may be exchanged between the Media Foundation playing architecture and an application.

In this embodiment, based on the above two playing architecture, corresponding methods are proposed to replace the original playing architecture component with the playing architecture reconstruction component.
(1) Given that the original playing architecture of the cloud desktop player is the DirectShow playing architecture, the Hook Function includes a Hook Function configured at an IGraphBuilder interface. A RenderFile method and a QueryInterface method of the Hook Function IGraphBuilder interface are performed at a process entry of the cloud desktop player. A Wmplayer that comes with the Windows system will intelligently build the playing architecture, so it is only necessary to re-implement the RenderFile method, and all the playing components adopt self-developed components. For players other than the Wmplayer, a Hook Function may be configured at an IMediaControl interface. That is, after the RenderFile method and the Query Interface method of the Hook Function IGraphBuilder interface, a Run method of the Hook Function IMediaControl interface is performed again. In this way, some of the original playing architecture components are replaced with self-developed playing architecture reconstruction components before the cloud desktop player starts the playing.

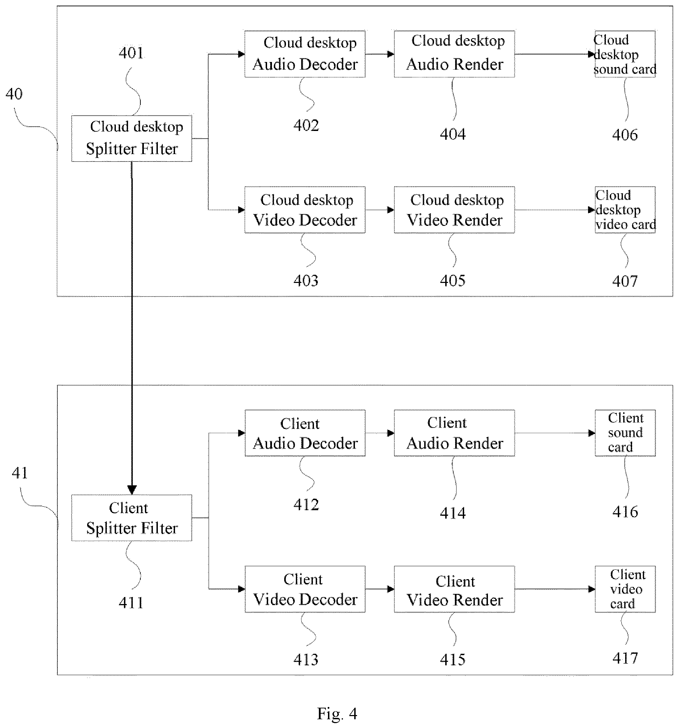

A schematic diagram of a reconstructed DirectShow playing architecture is shown in FIG. 4.

The reconstructed DirectShow playing architecture includes a cloud desktop player 40 at the server side and a client 41 located at the terminal device side, where the architecture of the cloud desktop player 40 is similar to the DirectShow playing architecture in FIG. 2, and the architecture of the client 41 is basically the same as the DirectShow playing architecture in FIG. 2.

The cloud desktop player 40 includes a cloud desktop Splitter Filter 401, a cloud desktop Audio Decoder 402, a cloud desktop Video Decoder 403, a cloud desktop Audio Render 404 and a cloud desktop Video Render 405. The cloud desktop player 40 further includes a cloud desktop sound card 406 and a cloud desktop video card 407. The client 41 includes a client Splitter Filter 411, a client Audio Decoder 412, a client Video Decoder 413, a client Audio Render 414 and a client Video Render 415. The client player 41 further includes a client sound card 416 and a client video card 417.

The cloud desktop Splitter Filter 401 is still a Source Filter, which is developed based on a corresponding interface of the DirectShow playing architecture, reads file information by FFmpeg, and reads and sends media files based on a file bit rate and a total playing duration. FFmpeg is a very powerful open source framework for encoding and decoding multimedia audios and videos, which can implement operations such as audio and video stream collection, recording, encoding, decoding and conversion, and provide a lot of open source libraries that can be compiled and run on various platforms. It is worth noting that, in FIG. 2, after reading a video file, the Splitter Filter will transmit the video file to the decoders. However, after reading the media stream file, the cloud desktop Splitter Filter 401 in FIG. 4 of this embodiment will not transmit the media stream file to the decoders but to the client 41 for decoding and playing.

The client Splitter Filter 411, the client Audio Decoder 412, the client Video Decoder 413, the client Audio Render 414, the client Video Render 415, the client sound card 416 and the client video card 417 at the client 41 side process the media stream files in exactly the same way as those of the cloud desktop player in FIG. 2, which will not be repeated here.

Operations of all components in the cloud desktop player 40 are mainly described as follows.

Due to the fact that the player under the reconstructed DirectShow playing architecture still relies on the cloud desktop player, in order to ensure that the media stream file can be acquired normally and decoded and played at the client 41 side, no crash occurring in the cloud desktop player 40 due to errors may be ensured. Therefore, after reading and transmitting the media stream file to the client 41, the Splitter Filter 401 also may transmit some false media data to the decoders.

In this embodiment, in order to reduce the resources occupation rate at the server side, and because both the decoders and the renders in the cloud desktop player 40 process the false media from the Splitter Filter 401, the decoders and the renders in the cloud desktop player 40 may be improved, so that the decoders do not have to decode the false media. In this case, after the Splitter Filter 401 transmits the false audios in the false media to the cloud desktop Audio Decoder 402 and the false videos in the false media to the cloud desktop Video Decoder 403, the cloud desktop Audio Decoder 402 and the cloud desktop Video Decoder 403 do not decode but directly pass through the received false audios or false videos to corresponding renders. Upon receipt of the false audios, the cloud desktop Audio Render 404 writes the false audios into the cloud desktop sound card 406. Upon receipt of the false video images, the cloud desktop Video Render 405 writes the false video images into the cloud desktop video card 407.

It can be understood that in the reconstructed DirectShow playing architecture, during video playing at the client, the cloud desktop player 40 also plays the false media, so the false audios in the false media are mute audios, and the false video images in the false media may be a black image, to avoid the playing of the false media from affecting the actual playing process of the client 41.

(2) Given that the original playing architecture of the cloud desktop player is the Media Foundation playing architecture, the Hook Function includes a Hook Function configured at an IMFMediaSession interface and a Hook Function configured at an IMFTopology interface. In some embodiments, a Start method and a SetTopology method of the Hook IMFMediaSession interface and an AddNode method of the HookIMFTopology interface may be performed at the process entry of the cloud desktop player.

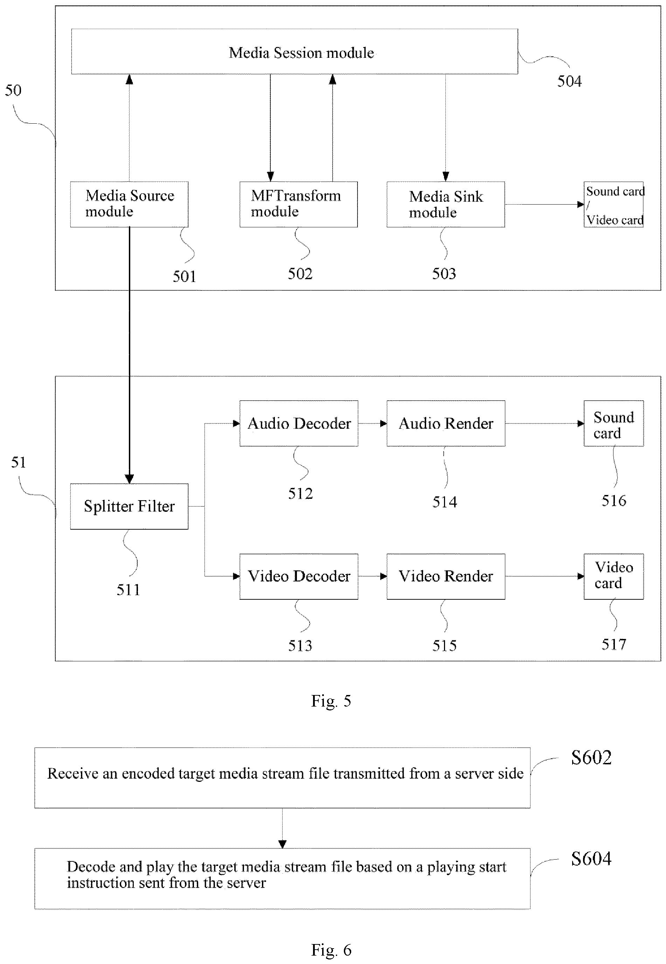

A schematic diagram of the reconstructed Media Foundation playing architecture is shown in FIG. 5.

The reconstructed Media Foundation playing architecture includes a cloud desktop player 50 at the server side and a client 51 located at the terminal device side. The architecture of the cloud desktop player 50 is similar to the Media Foundation architecture in FIG. 3, and the architecture of the client 51 is basically the same as the DirectShow playing architecture in FIG. 2.

The cloud desktop video player 50 includes a Media Source module 501, an MFTransform module 502, a Media Sink module 503 and a Media Session module 504. The client 51 includes a client Splitter Filter 511, a client Audio Decoder 512, a client Video Decoder 513, a client Audio Render 514 and a client Video Render 515.

The Media Source module 501 is developed based on a corresponding interface of the Media Foundation playing architecture. The Media Source module 501 reads file information by FFmpeg, and reads and sends files based on a file bit rate and a total playing duration. It should be noted that, in FIG. 3, after reading a video file, the Media Source module will transmit the video file to the Media Session module which transmits the video file to the decoders. However, after reading the media stream file, the Media Source module 501 in FIG. 5 of this embodiment will not transmit the media stream file to the MFTransform module 502 through the Media Session module 504, but to the client 51 for decoding and playing.

The Splitter Filter 511, the Audio Decoder 512, the Video Decoder 513, the Audio Render 514, the Video Render 515, a sound card 516 and a video card 517 at the client 51 side process the media stream files in exactly the same way as those of the cloud desktop player in FIG. 2, which will not be repeated here.

Operations of all components in the cloud desktop player 50 are mainly described as follows.

Due to the fact that the player under the reconstructed Media Foundation playing architecture still relies on the cloud desktop player, in order to ensure that the media stream file can be acquired normally and decoded and played at the client 51 side, no crash occurring in the cloud desktop player 40 due to errors may be ensured. Therefore, after reading and transmitting the media stream file to the client 51, the Splitter Filter 501 also may transmit some false media data to the decoders.

In this embodiment, in order to reduce the resources occupation rate at the server side, and because both the decoders and the renders in the cloud desktop player 50 process the false media from the Media Source module 501, the MFTransform module 502 in the cloud desktop player 50 may be improved, so that the MFTransform module 502 directly pass through the false media to the Media Session module 504 without decoding, and then the Media Session module 504 transmits the false media to the Media Sink module 503. The Media Sink module 503 will write the false audios in the false media into the cloud desktop sound card and the false video images in the false media into the cloud desktop video card.

It can be understood that under the reconstructed Media Foundation playing architecture, during video playing at the client, the cloud desktop player 50 also plays the false media, so the false audios in the false media are mute audios, and the false video images in the false media may be a black image, to avoid the playing of the false media from affecting the actual playing process of the client 51.

At S104, the target media stream file to be played by the cloud desktop player is intercepted.

In this embodiment, the target media stream file is a media stream file that is intended to be played by the cloud desktop player, and the target media stream file herein is a file that has not been decoded. The target media stream file includes both an audio file stream and a video image file stream.

As described above, given that the original playing architecture of the cloud desktop player is the DirectShow playing architecture, as shown in FIG. 4, the target media stream file may be intercepted by the cloud desktop Splitter Filter 401. Given that the original playing architecture of the cloud desktop player is the Media Foundation playing architecture, as shown in FIG. 5, the target media stream file may be intercepted by the Media Source module 501.

At S106, the undecoded target media stream file is transmitted to the terminal device side.

After the target media stream file is intercepted, the undecoded target media stream file may be transmitted to the terminal device side. In some examples of this embodiment, the server may transmit the target media stream file to the terminal device side through Transmission Control Protocol (TCP) connection. In other examples of this embodiment, the server side may transmit the target media stream file to the terminal device side through User Datagram Protocol (UDP) connection. In some examples, the server may adaptively select one of TCP connection and UDP connection according to the current network condition to transmit the target media stream file to the client at the terminal device side.

In some examples of this embodiment, the server can directly transmit the target media stream file to the terminal device. In other examples of this embodiment, the server may also encrypt part of the information in the target media stream file, so that the information can be protected by encryption during the transmission of the target media stream file.

At S108, a playing start instruction is sent to the terminal device to control the terminal device to play synchronously with the cloud desktop player.

In this embodiment, the client at the terminal device side plays the target media stream file, which is in effect adding a new playing window to the cloud desktop player. That is, after the replacement of some of the playing architecture components of the cloud desktop player, there are actually both original and new playing windows in the new cloud desktop player at the same time. The new playing window is configured to play the target media stream file, while the original playing window is configured to play the false media. At the same time, the new playing window blocks the original playing window. Therefore, except for the different sources of the content to be played, the original and new playing windows are synchronized in other aspects such as playing progress. Also, when controlling the client to start the playing of the target media stream file, the cloud desktop player should also start the playing of the false media.

Therefore, in an example of this embodiment, the server will send a playing start instruction to the terminal device side while controlling the cloud desktop player to start the playing. The instruction is configured to enable the client side to start the playing of the target media stream file. For example, given that the original playing architecture of the cloud desktop player is the DirectShow playing architecture, while sending the playing start instruction to the terminal device, the server controls the Splitter Filter to pass through the false media to the renders of the cloud desktop player through the decoders of the cloud desktop player, and outputs the false media rendered by the renders through the sound card and the video card. Given that the original playing architecture of the cloud desktop player is the Media Foundation playing architecture, while sending the playing start instruction to the terminal device, the server controls the Media Source to pass through the false media to the Media Sink of the cloud desktop player through the Media Session and the MFTransform of the cloud desktop player, and the Media Sink writes the false media into the sound card and the video card for output.

In some examples, the server may send the playing start instruction to the terminal device side from the moment of starting to transmit the target media stream file to the terminal device, enabling the client and the cloud desktop player to start the playing immediately. However, in other examples of this embodiment, before controlling the client and the cloud desktop player to start the playing, the server may wait for a default time from the moment of transmitting the target media stream file to the terminal device side. Given that the default time is TO which is greater than 0, and the moment at which the server starts transmitting the target media stream file to the terminal device side is t1, the server will send the playing start instruction to the terminal device side at the moment of t1+T0, and controls the cloud desktop player to start the playing of the false media at the same time. This method is mainly to avoid the impact of network delay on the playing of the client at the terminal device side as the terminal device side may cache a certain number of target media stream files during TO for which the server waits. In some examples, the TO may be 3s, but those having ordinary skills in the art can understand that the TO may be other values, which will not be enumerated herein.

In some examples of this embodiment, the server may monitor the real-time network conditions after controlling the client and the cloud desktop player to start the playing. In case a network abnormality or even network interruption is detected, the server can control the cloud desktop player to decode and play the target media stream file. As can be understood, the target media stream file is played by the client at the terminal device side before the network abnormality or network interruption, and the cloud desktop player only intercepts and transmits the target media stream file to the client and keeps itself from crashing. Therefore, in case of the network abnormality or network interruption, the server should switch to the original playing architecture components of the cloud desktop player and stop utilizing the playing architecture reconstruction components through Hook Function services.

At the terminal device side, the flow of the cloud desktop video playing scheme is shown in FIG. 6, including following steps of S602 and S604.

At S602, the undecoded target media stream file transmitted from the server side is received.

The terminal device may receive the target media stream file from the server through TCP connection, or may also receive the target media stream file through UDP connection.

At S604, the target media stream file is decoded and played based on the playing start instruction sent from the server.

It should be noted that, in this embodiment, the client does not necessarily decode and play the target media stream file immediately upon receipt of the file, but may wait for the playing start instruction sent from the server. Only upon receipt of the playing start instruction, the client at the terminal device side will start decoding and playing the target media stream file, ensuring that the playing progress of the target media stream file at the client is synchronized with that of the false media at the cloud desktop player.

Also as shown in the schematic diagrams of the reconstructed DirectShow playing architecture and the reconstructed Media Foundation playing architecture in FIG. 4 and FIG. 5, since the client side is based on the DirectShow playing architecture after reconstruction in both cases, the Splitter Filter will split the target media stream file into an audio stream file and a video image stream file in the process of playing the target media stream file, and then transmit the audio stream file and the video image stream file to the Audio Decoder and the Video Decoder, respectively. The Audio Decoder decodes the audio stream file and transmits the decoded file to the Audio Render for rendering and then writing into the sound card at the client side. The Video Decoder decodes the video image stream file and transmits the decoded file to the Video Render for rendering and then writing into the video card at the client side. The target media stream file is transmitted by being output both by the sound card and the video card.

As can be understood, given that the server side encrypts part or all of the information in the target media stream file at the time of transmitting the file, the terminal device side should first decrypt the encrypted information in the target media stream file upon receipt of the target media stream file.

According to the cloud desktop video playing method provided in this embodiment, under the original playing architecture of the cloud desktop player, the original playing architecture components in the cloud desktop player are replaced with the self-developed playing architecture reconstruction components through the Hook services, so that the cloud desktop player can intercept the target media stream file intended to be played and transmit the intercepted file to the terminal device side for decoding and playing. Since the target media stream file contains both the audio stream file and the video image stream file, the audio stream file and the video image stream file are sent together, which will not cause the problem of video and audio out of sync in the decoding and playing process at the terminal device side to affect the user experience.

At the same time, the cloud desktop video playing scheme provided in this embodiment is based on the cloud desktop player and thus only part of cloud playing architecture components in the playing architecture of the cloud desktop player are replaced, so there may no need to completely develop a new player, which not only reduces the R&D cost, but also avoids the problem that users are not accustomed to using specific self-developed players to be installed when needing to play videos.

More importantly, according to the cloud desktop video playing scheme provided in this embodiment, the original playing architecture components in the cloud desktop player may be replaced with the playing architecture reconfiguration component under good network conditions, so that the target media stream file can be decoded and played at the client side. In addition, the playing mode may be switched back to the original playing mode of the cloud desktop player under poor network conditions, which helps to improve the stability of playing.

### Embodiment Two

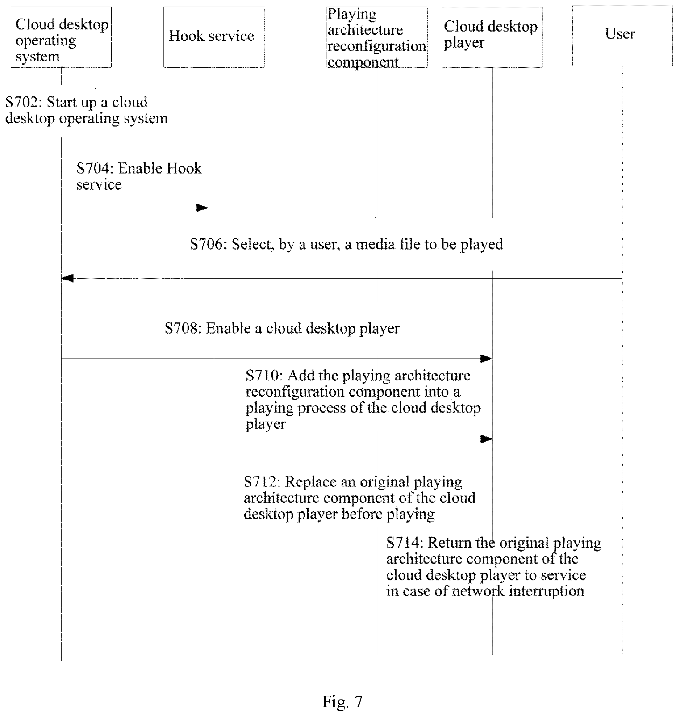

The above cloud desktop video playing method will be further described with some examples in this embodiment so that the advantages and details of the cloud desktop video playing method will be clearer to those having ordinary skills in the art, as shown in an interactive flow chart of the cloud desktop video playing method in FIG. 7. The method includes the following steps of S702, S704, S706, S708, S710 and S712.

At S702, a cloud desktop operating system is started up.

At S704, Hook Function services are enabled.

After the cloud desktop operating system is started up, the Hook Function services will be enabled. It can be understood that the Hook Function services may be self-enabled.

At S706, a user selects a media file to be played.

At S708, a cloud desktop player is enabled.

Since the user selects the media file to be played, there is a current may play a video on the cloud desktop, and the cloud desktop operating system will control and enable the cloud desktop player.

At S710, the playing architecture reconfiguration components are added into the playing process of the cloud desktop player through the Hook Function services.

At S712, the original playing architecture components of the cloud desktop player are replaced before playing.

In this embodiment, since the Hook Function is configured in the program of the cloud desktop player, a jump will occur when the program is run to a corresponding time point, allowing the video to be played based on the playing architecture reconstruction components instead of the original playing architecture components of the cloud desktop player. In this way, the effect of replacing the original playing architecture components in the cloud desktop player with the playing architecture reconstruction components can be realized.

The cloud desktop video playing method will be described first with reference to the schematic diagram of the reconstructed DirectShow playing architecture in FIG. 4.

A cloud desktop Splitter Filter 401 reads the media file selected by the user by FFmpeg to obtain a target media stream file. Since the original playing architecture components in the cloud desktop player have been replaced with the playing architecture reconfiguration components, the cloud desktop Splitter Filter 401 will not split the read target media stream file into an audio stream file and a video stream file and then transmit them to a cloud desktop Audio Decoder 402 and a cloud desktop Video Decoder 403, respectively, but will transmit the target media stream file to a client 41.

In an example of this embodiment, the key information in the target media stream file transmitted from the cloud desktop Splitter Filter 401 to a client Splitter Filter 411 is encrypted. Upon receipt of the target media stream file, the client Splitter Filter 411 will decrypt the target media stream file with a decryption method corresponding to the encryption method.

In some examples, 3s after the cloud desktop Splitter Filter 401 transmits the target media stream file to the client 41, the server side will send a playing start instruction to the client for the client to decode and play the target media stream file. At the same time, the server will also control the Splitter Filter 401 to send a false audio file to the cloud desktop Audio Decoder 402 and a false video image file to the cloud desktop Video Decoder 403. The cloud desktop Audio Decoder 402 will not decode but pass through the received false audio file to a cloud desktop Audio Render 404. The cloud desktop Video Decoder 403 will not decode but directly pass through the received video image stream file to a cloud desktop Video Render 405. The desktop Audio Render 404 directly writes mute data to a sound card, and acquires and transmits information on player and system volume adjustment by the user to the client for processing. The cloud desktop Video Render 405 will draw a black image of the same size as a current playing window of the cloud client to the video card for display. However, it should be noted that the cloud desktop video render 405 does not draw the black image in real time, but only redraws the black image when the client playing window moves or a change in the size of the playing window occurs, which is mainly to prevent the processing operation of the Video Render 405 from taking up the CPU at the cloud desktop side.

It should be understood that the false video image file at the client is not necessarily a black image, and other colors are also possible.

The client Splitter Filter 411 will split the target media stream file into an audio stream file and a video image stream file, and then transmit the audio stream file and the video image stream file to the client Audio Decoder 412 and client Video Decoder 413, respectively. The client Audio Decoder 412 decodes the audio stream file and transmits the decoded file to the client Audio Render 414 for rendering and then writing into the client sound card 416. The client Video Decoder 413 decodes the video image stream file and transmits the decoded file to the client Video Render 415 for rendering and then writing into the client video card 417. Through the cooperative output of the client sound card 416 and the client video card 417, transmission of the target media stream is realized.

The cloud desktop video playing method will be described below with reference to the schematic diagram of the reconstructed Media Foundation playing architecture shown in FIG. 5.

A Media Source module 501 reads a media file selected by the user by FFmpeg to obtain a target media stream file. Since the original playing architecture components in the cloud desktop player have been replaced with the playing architecture reconfiguration components, the Media Source module 501 will not transmit the read target media stream file to the Media Session module 504 but to the client 51.

In an example of this embodiment, the key information in the target media stream file transmitted from the Media Source module 501 to a Splitter Filter 511 is encrypted. Upon receipt of the target media stream file, the Splitter Filter 511 will decrypt the target media stream file with a decryption method corresponding to the encryption method.

In some examples, 3s after the cloud desktop Media Source 501 transmits the target media stream file to the client 51, the server side will send a playing start instruction to the client 51 for the client 51 to decode and play the target media stream file. At the same time, the server will also control the Media Source module 501 to transmit the false media to the MFTransform module 502 through the Media Session module 504, and the MFTransform module 502 will not process the received false media, but pass through the false media directly to the Media Sink module 503 through the Media Session module 504. An audio processing module in the Media Sink module 503 directly writes the mute data into the sound card, and acquires and transmits information on player and system volume adjustment by the user to the client for processing. A video processing module in the Media Sink module 503 draws a black image of the same size as a current playing window of the cloud client to the video card for display. However, it should be noted that the Media Sink module 503 does not draw the black image in real time, but only redraws the black image again when the client playing window moves or a change in the size of the playing window occurs, which is mainly to prevent the processing operation of the Media Sink module 503 from taking up the CPU at the cloud desktop side.

It should be understood that the false video image file on the client is not necessarily a black image, and other colors are also possible.

The client Splitter Filter 411 will split the target media stream file into an audio stream file and a video image stream file, and then transmit the audio stream file and the video image stream file to the client Audio Decoder 412 and the client Video Decoder 413, respectively. The client Audio Decoder 412 decodes the audio stream file and transmits the decoded file to the client Audio Render 414 for rendering and writing into the client sound card 416. The client Video Decoder 413 decodes the video image stream file and transmits the decoded file to the client Video Render 415 for rendering and writing into the client video card 417. Through the cooperative output of the client sound card 416 and the client video card 417, transmission of the target media stream is realized.

At S714, the original playing architecture components of the cloud desktop player are returned to service in case of network interruption.

In the event of network interruption, messages may be sent to the playing architecture reconfiguration components so that the system default components are adopted for in-band playing, and the original playing architecture components of the cloud desktop player are still adopted.

The cloud desktop video playing scheme provided in this embodiment can efficiently meet the use requirements of the cloud desktop in the local video field, save user resources, meet the requirements of users and enhance user experience without limiting the type of players, thus playing a good exemplary role in the promotion of the cloud desktop field.

### Embodiment Three

In this embodiment, a storage medium storing one or more computer programs that may be read, compiled and executed by one or more processors is provided. In this embodiment, the storage medium can store at least one of a first cloud desktop video playing program and a second cloud desktop video playing program. The first cloud desktop video playing program, when executed by one or more processors, causes the one or more processors to perform the steps of any one of the cloud desktop video playing methods described in the above embodiments at the server side. The second cloud desktop video program, when executed by one or more processors, causes the one or more processors to perform the steps of any one of the cloud desktop video playing methods described in the above embodiments at the terminal device side.

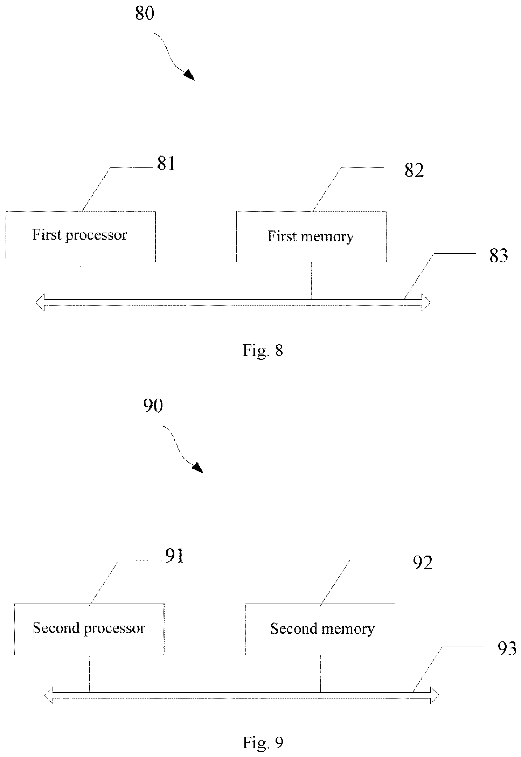

Furthermore, a server is provided in this embodiment, as shown in FIG. 8. The server 80 includes a first processor 81, a first memory 82, and a first communication bus 83 for connecting the first processor 81 and the first memory 82. The first memory 82 may store the first cloud desktop video playing program. The first processor 81 may read and compile a software package transmission program to implement the steps of the software package transmission method described in the above embodiment at the server side.

After detecting an instruction to enable a cloud desktop player, the first processor 81 replaces the original playing architecture components in the cloud desktop player with the playing architecture reconstruction components through a Hook Function, and then intercepts a target media stream file to be played by the cloud desktop player, where the target media stream contains an audio file stream and a video image file stream. The first processor 81 may transmit the undecoded intercepted target media stream file to the terminal device side, and send a playing start instruction to the terminal device to control the terminal device to play synchronously with the cloud desktop player, where the terminal device plays the target media stream file, and the cloud desktop player plays false media without decoding.

In an example of this embodiment, given that the original playing architecture of the cloud desktop player is DirectShow playing architecture, the Hook Function includes a Hook Function configured at an IGraphBuilder interface.

In some embodiments, given that the cloud desktop player is a player other than Wmplayer, the Hook Function further includes a Hook Function configured at an IMediaControl interface.

In an example of this embodiment, when intercepting the target media stream file to be played by the cloud desktop player, the first processor 81 may control a Splitter Filter of the cloud desktop player to intercept the target media stream file. When controlling the terminal device to play synchronously with the cloud desktop player, the first processor 81 sends a playing start instruction to the terminal device while controlling the Splitter Filter to pass through the false media to renders of the cloud desktop player through decoders of the cloud desktop player, and the false media rendered by the renders are output through a sound card and a video card.

In an example of this embodiment, given that the original playing architecture of the cloud desktop player is Media Foundation playing architecture, the Hook Function includes a Hook Function configured at an IMFMediaSession interface and a Hook Function configured at an IMFTopology interface.

In an example of this embodiment, when intercepting the target media stream file to be played by the cloud desktop player, the first processor 81 may control the Media Source of the cloud desktop player to intercept the target media stream file. When controlling the terminal device to play synchronously with the cloud desktop player, the first processor 81 sends a playing start instruction to the terminal device while controlling the Media Source to pass through the false media to the Media Sink of the cloud desktop player through the Media Session and the MFTransform of the cloud desktop player, and the Media Sink writes the false media into the sound card and the video card for output.

In some embodiments, the first processor 81 may encrypt at least part of the information in the target media stream file, and transmit the encrypted target media stream file to the terminal device.

In some embodiments, the first processor 81 also monitors the real-time network conditions after sending the playing start instruction to the terminal device. When determining that the current network is abnormal or interrupted, the cloud desktop player is adopted to decode and play the target media stream file.

In an example of this embodiment, before controlling the terminal device to play synchronously with the cloud desktop player, the first processor 81 will also ensure that the target media stream file has been transmitted to the terminal device for a default time which is greater than 0.

In an example of this embodiment, the audio file streams are mute audio file streams, and/or the video image file streams are black image file streams.

Furthermore, a server is provided in this embodiment, as shown in FIG. 9. The server 90 includes a second processor 91, a second memory 92, and a second communication bus 93 for connecting the second processor 91 and the second memory 92. The second memory 92 may store the second cloud desktop video playing program. The second processor 91 may read and compile a software package transmission program to implement the steps of the software package transmission method described in the above embodiment at the server side.

The second processor 91 may receive the undecoded target media stream file transmitted from the server side, and decode and play the target media stream file according to the playing start instruction sent from the server. The playing process of the target media stream file by the second processor 91 is synchronized with that of the false media without decoding of the cloud desktop player at the server side.

In some embodiments, given that at least part of the information in the target media stream file is encrypted, the second processor 91 further may decrypt the encrypted information in the target media stream file before decoding and playing the target media stream file based on the playing start instruction sent from the server.

According to the server and the terminal device provided in this embodiment, under the original playing architecture of the cloud desktop player, the original playing architecture components in the cloud desktop player are replaced with the self-developed playing architecture reconstruction components through the Hook Function services, so that the cloud desktop player can intercept the target media stream file intended to be played by the cloud desktop player and transmit the intercepted file to the terminal device side for decoding and playing by the terminal device side. Since the target media stream file contains both the audio stream file and the video image stream file, the audio stream file and the video image stream file are sent together, which will not cause the problem of video and audio out of sync in the decoding and playing process at the terminal device side to affect the user experience.

According to the cloud desktop video playing method, the server, the terminal device and the storage medium provided in the embodiments of the present invention, after detecting an instruction to enable the cloud desktop player, the server side replaces the original playing architecture components in the cloud desktop player with the playing architecture reconfiguration components through the Hook Function, intercepts and transmits the undecoded target media stream file intended to be played by the cloud desktop player to the terminal device side, and sends a playing start instruction to the terminal device to control the terminal device to play synchronously with the cloud desktop player. The terminal device plays the target media stream file, and the cloud desktop player plays the false media without decoding. Since the server side transmits the audio file stream and the video image file stream together in a target media stream file to the terminal device side, and the terminal device side can decode and play the target media stream file, the problem of video and audio out of sync will not occur. Also, while the client plays the video, the cloud desktop player also plays the false media, so the crash of the cloud desktop player is avoided. At the same time, the video playing scheme provided in the embodiments of the present invention is to play the video by replacing part of the original architecture components of the cloud desktop player, so that no self-developed clients may be needed, which avoids the problem that the playing scheme is limited by the user's habits and is beneficial to improving the user experience.

It can be understood that the contents in the various embodiments of the present invention may be combined with each other without conflict.

Obviously, it should be understood by those having ordinary skills in the art that all or some of the steps in the methods, and functional modules/units in the systems and devices disclosed above may be implemented as software (which may be implemented by program codes executable by a computing device), firmware, hardware, and appropriate combinations thereof. In the implementations by hardware, the division between functional modules/units mentioned in the above description does not necessarily correspond to the division of physical components. For example, a physical component may have a plurality of functions, or a function or step may be implemented cooperatively by several physical components. Some or all of the physical components may be implemented as software executed by a processor, such as CPU, a digital signal processor or a microprocessor, or as hardware, or as an integrated circuit, such as an application specific integrated circuit. Such software may be distributed on a computer-readable medium which may include a computer storage medium (or non-transient medium) and a communication medium (or transient medium), executed by a computing device, and in some cases, the steps shown or described may be implemented in a different order than shown herein. It is well known to those having ordinary skills in the art that the computer storage medium includes volatile and nonvolatile, removable and non-removable media implemented in any method or technology for storing information, such as computer readable instructions, data structures, program modules or other data. The computer storage medium includes, without limitation, RAM, ROM, EEPROM, flash memory or other memory technologies, CD-ROM, digital versatile disk (DVD) or other optical disk storage, magnetic cartridges, magnetic tapes, disk storage or other magnetic storage devices, or any other media that may be adopted to store desired information and may be accessed by a computer. Furthermore, it is well known to those having ordinary skills in the art that the communication medium typically contains computer-readable instructions, data structures, program modules, or other data in modulated data signals such as carrier waves or other transmission mechanisms, and may include any information delivery media. Therefore, the present invention is not limited to any particular combination of hardware and software.

The above descriptions are further detailed descriptions of the embodiments of the present invention with reference to specific implementation ways, and it cannot be assumed that the specific implementation ways of the present invention are limited to these descriptions. For those having ordinary skills in the art to which the present invention belongs, a number of simple derivations or substitutions may also be made without departing from the concept of the present invention, all of which should be regarded as falling into the protection scope of the present invention.

## Claims

1. A cloud desktop video playing method, comprising:
in response to a detection of an instruction to enable a cloud desktop player, replacing an original playing architecture component in the cloud desktop player with a playing architecture reconstruction component through a Hook Function;
intercepting a target media stream file to be played by the cloud desktop player, wherein the target media stream contains an audio file stream and a video image file stream;
transmitting the undecoded target media stream file to a terminal device side; and
sending a playing start instruction to the terminal device, and controlling the terminal device to play synchronously with the cloud desktop player, wherein the terminal device plays the target media stream file, and the cloud desktop player plays false media without decoding.

2. The cloud desktop video playing method of claim 1, wherein in response to the original playing architecture of the cloud desktop player being DirectShow playing architecture, the Hook Function comprises a Hook Function configured at an IGraphBuilder interface.

3. The cloud desktop video playing method of claim 2, wherein in response to the cloud desktop player being a player other than Wmplayer, the Hook Function further comprises a Hook Function configured at an IMediaControl interface.

4. The cloud desktop video playing method of claim 2, wherein intercepting a target media stream file to be played by the cloud desktop player comprises:
controlling a Splitter Filter of the cloud desktop player to intercept the target media stream file;
controlling the terminal device to play synchronously with the cloud desktop player comprises:
sending the playing start instruction to the terminal device and at the same time, controlling the Splitter Filter to pass through the false media to renders of the cloud desktop player through decoders of the cloud desktop player, and outputting the false media rendered by the renders through a sound card and a video card.

5. The cloud desktop video playing method of claim 1, wherein in response to the original playing architecture of the cloud desktop player being Media Foundation playing architecture, the Hook Function comprises a Hook Function configured at an IMFMediaSession interface and a Hook Function configured at an IMFTopology interface.

6. The cloud desktop video playing method of claim 5, wherein intercepting a target media stream file to be played by the cloud desktop player comprises:
controlling a Media Source of the cloud desktop player to intercept the target media stream file;
controlling the terminal device to play synchronously with the cloud desktop player comprises:
sending the playing start instruction to the terminal device and at the same time, controlling the Media Source to pass through the false media to a Media Sink of the cloud desktop player through a Media Session and a MFTransform of the cloud desktop player, and outputting the false media written by the Media Sink into the sound card and the video card.

7. The cloud desktop video playing method of any one of claim 1 to 6, wherein transmitting the target media stream file to the terminal device side comprises:
encrypting at least part of information in the target media stream file; and
sending the encrypted target media stream file to the terminal device.

8. The cloud desktop video playing method of any one of claims 1 to 6, after sending a playing start instruction to the terminal device, further comprising:
monitoring real-time network conditions; and
in response to a determination of current network abnormality or interruption, decoding and playing, by the cloud desktop player, the target media stream file.

9. The cloud desktop video playing method of any one of claims 1 to 6, prior to controlling the terminal device to play synchronously with the cloud desktop player, further comprising:
ensuring that the target media stream file has been transmitted to the terminal device for a default time which is greater than 0.

10. The cloud desktop video playing method of any one of claims 1 to 6, wherein the audio file stream in the false media is mute audio, and/or the video image file in the false media is a black image.

11. A cloud desktop video playing method, comprising:
receiving an encoded target media stream file transmitted from a server side, wherein the target media stream contains an audio file stream and a video image file stream; and
decoding and playing the target media stream file based on a playing start instruction sent from the server, and synchronizing a playing process of the target media stream file with that of false media without decoding of the cloud desktop player at the server side.

12. The cloud desktop video playing method of claim 11, wherein at least part of information in the target media stream file is encrypted, and prior to decoding and playing the target media stream file based on a playing start instruction sent from the server, the method further comprises:
decrypting the encrypted information in the target media stream file.

13. A server comprising a first processor, a first memory and a first communication bus, wherein
the first communication bus is configured to implement communication between the first processor and the first memory; and
the first processor is configured to execute one or more programs stored in the first memory to perform the steps of the cloud desktop video playing method of any one of claims 1 to 10.

14. A terminal device, comprising a second processor, a second memory and a second communication bus, wherein
the second communication bus is configured to implement communication between the second processor and the second memory; and
the second processor is configured to execute one or more programs stored in the second memory to perform the steps of the cloud desktop video playing method of claim 11 or 12.

15. A storage medium storing at least one of a first cloud desktop video playing program and a second cloud desktop video playing program, wherein the first cloud desktop video playing program, when executed by one or more processors, causes the one or more processors to perform the steps of the cloud desktop video player method of any one of claims 1 to 10, and the second cloud desktop video playing program, when executed by one or more processors, causes the one or more processors to perform the steps of the cloud desktop video playing method of claim 11 or 12.
